# EUROPÄISCHE PATENTSCHRIFT

(11) **EP 0 513 317 B1**
(45) Veröffentlichungstag und Bekanntmachung des Hinweises auf die Patenterteilung: **21.02.1996**
(21) Anmeldenummer: 92901182.3
(22) Anmeldetag: 27.11.1991
(51) Int. Cl.: B65D 21/00

(54) **MEHRWEGVERPACKUNG**
RE-USABLE PACKAGE
EMBALLAGE REUTILISABLE

(30) Priorität: 27.11.1990 DE 4037696; 15.05.1991 DE 4115893
(43) Veröffentlichungstag der Anmeldung: 19.11.1992
(73) Patentinhaber: Schoeller-Plast S.A., CH-1680 Romont (CH)
(72) Erfinder: UMIKER, Hans, CH-8132 Egg (CH)
(74) Vertreter: Bockhorni, Josef, Dipl.-Ing.
(86) Internationale Anmeldenummer: EP9102248
(87) Internationale Veröffentlichungsnummer: WO9209491

(56) Entgegenhaltungen:
- GB-A- 2 033 874
- US-A- 3 908 852
- US-A- 4 491 231

## Beschreibung

Die Erfindung betrifft eine Mehrwegverpackung gemäß dem Oberbegriff des Anspruches 1.

Die zunehmende Bedeutung des Umweltschutzes und die sich daraus ergeben Forderungen nach Abfallreduzierung bzw. weitgehender Abfallvermeidung führen zu erheblichen Schwierigkeiten bei herkömmlichen Verpackungssystemen, da nach geplanten und in einigen Ländern bereits verabschiedeten Verordnungen Transportverpackungen vom Groß- und Einzelhandel nach Gebrauch zurückgenommen und einer erneuten Verwendung oder einer Verwertung außerhalb der öffentlichen Abfallentsorgung zugeführt werden müssen. Bei herkömmlichen Einweg-Kartonverpackungen, die sehr häufig in Kombination mit Schrumpffolien und Klebebändern verwendet werden, bedeutet dies beim Handel oder dem für die Entsorgung der Verpackung verantwortlichen Dienstleistungsunternehmen einen Sortier- und Lageraufwand, der zwangsläufig zu einer Verteuerung der konventionellen Verpackungssysteme führt.

Zur Behebung dieser Probleme sind bereits Konzepte für Mehrweg-Verpackungs-Systeme vorgeschlagen worden, die sich jedoch in der Praxis nicht durchsetzen konnten bzw. vom Handel oder vom Verbraucher aus unterschiedlichen Gründen nicht angenommen wurden.

Aus der Patentschrift FR-A-2 190 682 ist bereits eine Verpackung gemäß dem Oberbegriff des Anspruchs 1 bekannt, die aus vereinzelbaren Elementen auf der Basis von zwei unterschiedlichen Modulelementen besteht. Das eine dieser Elemente dient als Boden- bzw. Deckelelement, das andere als Wandelement. Dieses System eignet sich für die Verpackung von Gegenständen unterschiedlicher Größe. Durch die Übereinanderstapelung von mehreren Wandelementen lassen sich verschiedene Höhen des Behältnisses erreichen. Dieses Verpackungselement kann nicht in platzsparender Weise für den Rücktransport verwendet werden, sondern behält auch dann, wenn es leer ist, sein gesamtes Volumen bei. Sie besitzt ferner keine produktpräsentierenden Eigenschaften.

Aus der GB-A-2 033 874 ist ein Verpackungsbehälter bekannt, der aus drei verschiedenen Elementen besteht, die notwendigerweise zur Bildung eines Behälters erforderlich sind.

Aus dem US-A-3 908 852 ist ein Lagerbehälter bekannt, der in zwei Abteile unterteilt ist, dergestalt, daß der Deckel der unteren Verpackungskammer zugleich Boden der darüberliegenden Verpackungskammer ist.

Es ist bereits ein Verpackungs-System vorgeschlagen worden, das aus kastenförmigen Behältern aus recyclerbarem Kunststoff besteht, deren Seitenwände zum Zwecke der Stapelbarkeit der leeren Behälter konisch ausgebildet sind. Abgesehen davon, daß sich infolge der konischen Ausführung der Behälterseitenwände ein nicht unwesentliches totes Volumen ergibt, das für die Verpackung bzw. die Aufnahme der zu transportierenden Produkte nicht genutzt werden kann, hat die konische Ausführung des Behälters häufig ein Verklemmen der ineinandergestapelten Behälter beim Rücktransport zur Folge, was beim Trennen der gestapelten Behälter dann auch die Gefahr der Beschädigung bzw. der Zerstörung der Behälter in sich birgt. Ferner ergibt sich bei diesen Behältern die Notwendigkeit für den Handel, die im Behälter eingepackten Gegenstände durch das Verkaufspersonal aus dem Behälter auspacken und in die Regale umzusetzen, was die Handhabbarkeit beeinträchtigt.

Schließlich ist es bekannt, einen Behälter aus klappbaren Elementen aufzubauen, was aber wiederum erfordert, daß die Ware zum Zwecke der Präsentation aus dem Behälter entnommen und in das Regal umgesetzt werden muß. Ferner ergibt sich aufgrund der Vielzahl der bei dieser Lösung verwendeten Gelenkscharniere eine nicht unerhebliche Schwächung des Behälters, so daß der Einsatz dieses Behältersystems auf den Transport und die Verpackung vergleichsweise leichter Produkte begrenzt ist. Der vielfach klapprige Aufbau dieser Systeme bringt es mit sich, daß diese Art der Verpackung nur zögerlich vom Handel und Verbraucher angenommen wird, wobei sich insbesondere Hersteller qualitativ hochwertiger Güter gegenüber diesen Systemen vor allem deswegen verweigern, weil sie fürchten, daß die Mängel der Verpackung mit den eigenen Produkten identifiziert werden.

Aufgabe der Erfindung ist es, eine Mehrwegverpackung, die aus zwei Grundelementen kombinierbar ist, zu schaffen.

Diese Aufgabe wird erfindungsgemäß durch die im Anspruch 1 enthaltenen Merkmale gelöst, wobei zweckmäßige Weiterbildungen der Erfindung durch die in den Unteransprüchen enthaltenen Merkmale gekennzeichnet sind.

Der erfindungsgemäße Behälter ist ein Kasten aus vereinzelbaren Elementen aus Boden, Deckel und die Seitenwände des Behälters bzw. Kastens bildenden Wandrahmen. Boden und Deckel sind einheitlich, d.h. der Boden kann zugleich als Deckel verwendet werden und umgekehrt. Boden bzw. Deckel sind tablettartig ausgebildet und bestehen insbesondere aus einem plattenförmigen Bodenelement mit einer umlaufenden Wandleiste geringer Höhe. Die einzelnen Elemente sind vorzugsweise über Steckverbindungen zum Behälter zusammensetzbar, wobei auf den Boden der Wandrahmen und auf den Wandrahmen danach der Deckel aufgesetzt wird. Dies erlaubt es, die Verpackung unmittelbar auch zur Produktpräsentation zu verwenden, da lediglich der Deckel und/oder der Wandrahmen nach oben hin abgenommen und die Waren zusammen mit dem Bodenelement in das Regal umgesetzt werden können. Dadurch entfällt das bei konventionellen Verpackungssystemen erforderliche Entpacken der Ware und das Umsetzen der Ware in das Regal durch das Verkaufspersonal. Zweckmäßigerweise ist das System modular aufgebaut, indem Boden und Deckel miteinander kombinierbar sind, d.h. auch ohne Wandrahmen Boden und Deckel einen Behälter zur Aufnahme von Dosen bilden. Ferner können je nach Höhe der aufzunehmenden Produkte ein oder mehrere Wandrahmen übereinander angeordnet verwendet werden.

Boden und Deckel einen Behälter zur Aufnahme von Dosen bilden. Ferner können, je nach Höhe der aufzunehmenden Produkte, ein oder mehrere Wandrahmen übereinander angeordnet verwendet werden.

Besonders vorteilhaft ist es, den Wandrahmen klappbar auszubilden, da sich hierdurch das für den Rücktransport erforderliche Volumen beträchtlich reduzieren läßt. Boden und Deckel sind zweckmäßigerweise für den Rücktransport ineinander stapelbar. Hierbei ist es zweckmäßig, Gelenke in den Eckbereichen und/oder mittig in den Rahmenseiten vorzusehen, so daß der Rahmen auf ein Maß zusammengeklappt werden kann, das ein Unterbringen des zusammengeklappten Rahmens im Behälter selbst ermöglicht oder der zusammengeklappte Rahmen von seinen Abmessungen her nicht über die Grundabmessungen der anderen Behälterelemente vorsteht.

Erfindungsgemäße Griffmulden in Boden und Deckel erleichtern nicht nur das Handling sondern bilden Öffnungschlitze für den geschlossenen Behälter zum Zwecke der Ventilation und Kühlung.

Durch den Einsatz von Noppen, die insbesondere innerhalb von Noppenfeldern an vorbestimmten Flächen an Boden und Deckel eingesetzt werden, ergibt sich eine weitgehend rutschfreie Stapelung der Behälter und lassen sich die bei konventionellen Verpackungen häufig verwendeten Stapelränder vermeiden, was wiederum den Vorteil der kombinierten Verwendung der erfindungsgemäßen Verpackung mit herkömmlichen Verpackungssystemen, insbesondere Kartonverpackungen, ermöglicht. Zweckmäßigerweise kann der Wandrahmen mit Displayöffnungen ausgebildet sein, die gegebenenfalls durch eine transparente Wand des Wandrahmens gebildet sein können. Zweckmäßigerweise werden die zu einem Behälter zusammengesetzten einzelnen Elemente über herkömmliche Spannbänder, die verschweißbar sind, fixiert, wobei jedoch auch andere Befestigungsmöglichkeiten realisierbar sind, wie insbesondere Druckknopfsysteme. Zweckmäßigerweise sind hierbei die Spannbänder und sonstigen Befestigungen aus demselben Material wie die einzelnen Elemente des Behälters hergestellt und zwar bevorzugt aus Polypropylen, was ein einfaches Recycling zuläßt. Polypropylen hat sich hierbei als geeignetes Material herausgestellt, da sich hierbei für den Behälter Nutzungs- bzw. Einsatzzeiten von mehr als zehn Jahren ergeben.

Die Erfindung gewährleistet, daß mit wenigen Systemkomponenten eine universell anwendbare Mehrwegverpackung erzielt wird; durch Hinzunahme von einem oder mehreren Wandrahmen läßt sich dabei die Behälterhöhe beliebig variieren.

Der Kasten eignet sich somit sehr gut für den Transport der Ware, genauso gut jedoch auch für die Präsentation der Ware im Regal. Gleichzeitig wird ein raumsparender Rücktransport des Kastens ermöglicht. Aufgrund des modularen Aufbaus ist ein- und derselbe Kasten für viele unterschiedliche Produkte verwendbar. Durch die Vielseitigkeit der Anwendbarkeit dieses Verpackungssystems aus nur zwei System-Komponenten, nämlich Tray bzw. schalenförmiges bzw. tablettförmiges Bodenelement für Boden und Deckel sowie Rahmen für die Seitenwände ist eine Lösung für die oben herausgestellte Problemstellung gegeben, die vom Handel und vom Verbraucher angenommen wird.

Nachfolgend werden wesentliche Merkmale der Erfindung anhand der Beschreibung einer bevorzugten Ausführungsform herausgestellt. In den Zeichnungen zeigen:
- Fig. 1: eine Ansicht des Bodenelementes des Behälters von unten,
- Fig. 2: eine Draufsicht auf das Bodenelement nach Fig. 1,
- Fig. 3: eine teilweise geschnittene Seitenansicht des Bodenelements, gesehen von der Schmalseite her,
- Fig. 4: eine Seitenansicht des Bodenelements, teilweise im Schnitt und gesehen von der Langseite her,
- Fig. 5: eine Draufsicht auf einen Wandrahmen des Behälters,
- Fig. 6: eine Seitenansicht des Wandrahmens nach Fig. 5, wobei die linke Hälfte in Schnittdarstellung gezeigt ist,
- Fig. 7: eine in einer Hälfte geschnittene Ansicht des Wandrahmens, gesehen von der Schmalseite her,
- Fig. 8: eine Draufsicht auf eine weitere Ausführungsform eines Wandrahmens,
- Fig. 9: eine Draufsicht auf ein Teilelement des Wandrahmens nach Fig. 8,
- Fig. 10: eine Seitenansicht des in Fig. 9 dargestellten Teilelements,
- Fig. 11: eine Draufsicht des in Fig. 9 dargestellten Teilelements in Klappstellung,
- Fig. 12: eine Seitenansicht des in Fig. 11 dargestellten Teilelements,
- Fig. 13: eine Schnittansicht längs Linie C-C in Fig. 10,
- Fig. 14: eine Schnittansicht längs Linie D-D von Fig. 12,
- Fig. 15: eine Schnitt- und Seitenansicht des in Fig. 8 dargestellten Wandrahmens (Schnitt längs Linie A-A, Ansicht gemäß Pfeil Z),
- Fig. 16: eine Schnittansicht längs Linie B-B sowie eine Teilansicht gemäß Pfeil Y nach Fig. 8,
- Fig. 17: eine Schnittansicht einer Einzelheit in Fig. 16,
- Fig. 18: eine Draufsicht auf eine weitere Ausführungsform eines Boden/Deckels,
- Fig. 19: eine teilweise geschnittene Seitenansicht des Deckels in Fig. 18,
- Fig. 20: eine Einzelheit eines Verrastmechanismus des Deckels mit einem zugehörigen Wandrahmen oder Deckel, der aufgesetzt wird,
- Fig. 21: eine Einzelheit X aus Fig. 19 zur Darstellung der speziellen Ausgestaltung der Zungen und Ausnehmungen 14 und 15,
- Fig. 22: eine Ansicht der Schmalseite des Deckels von Fig. 18,
- Fig. 23: eine Einzelheit der am Boden des Deckels vorgesehenen Noppenfelder,
- Fig. 24: eine Draufsicht auf zu einem klappbaren Wandrahmen zusammensetzbaren Teilelementen,

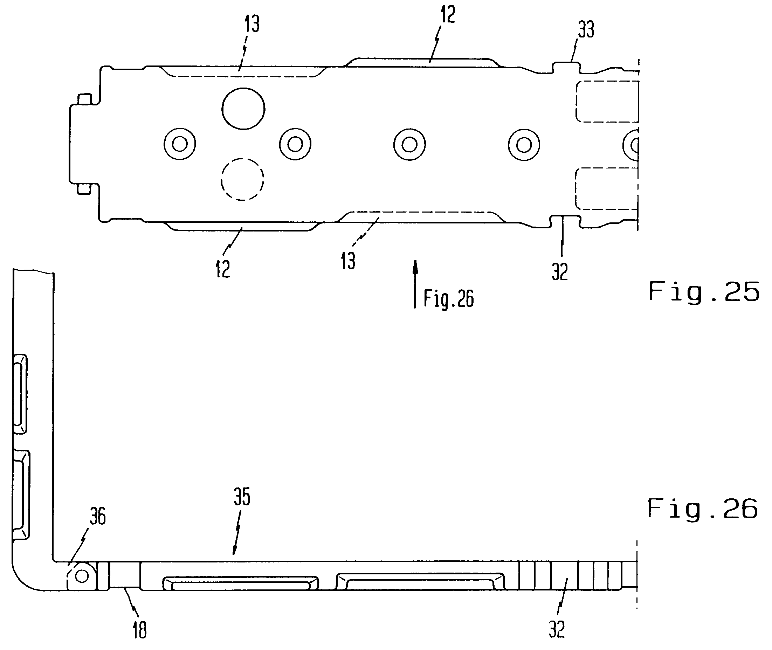

- Fig. 25: eine Seitenansicht eines halben Teilelements, welches die Längsseite eines klappbaren Wandrahmens bildet,
- Fig. 26: die Ansicht nach Fig. 25 in Draufsicht,
- Fig. 27: eine Seitenansicht des in Fig. 24 dargestellten längsverlaufenden Teilelements (vgl. auch Darstellung in Fig. 25),
- Fig. 28: eine Seitenansicht des kurzen Teilelements nach Fig 24,
- Fig. 29: die Einzelheit des Verrastmechanismus der Längsseite des Wandrahmens nach Fig. 27 sowie
- Fig. 30: eine Seitenansicht der kurzen Seite des Wandrahmens bzw. des entsprechenden Teilelements nach Fig. 24.

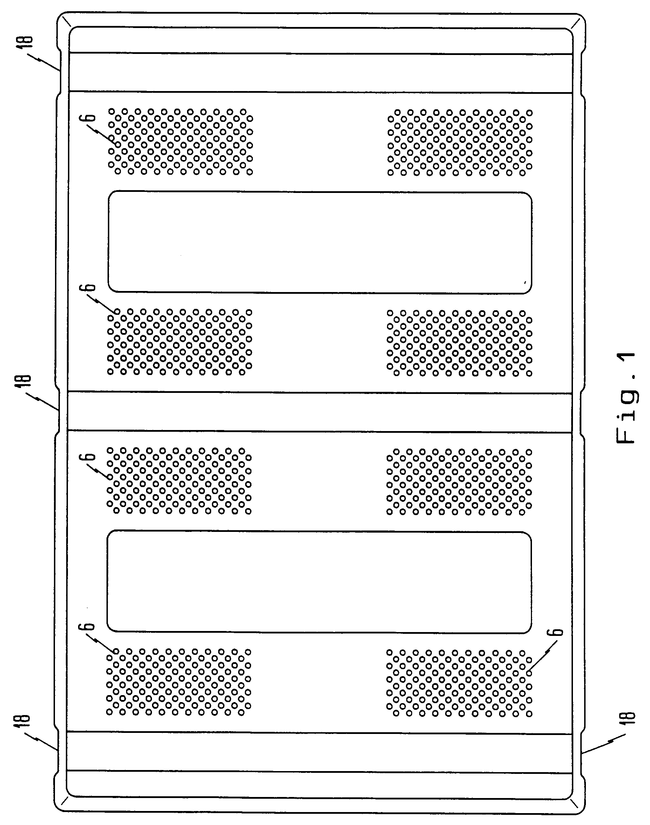

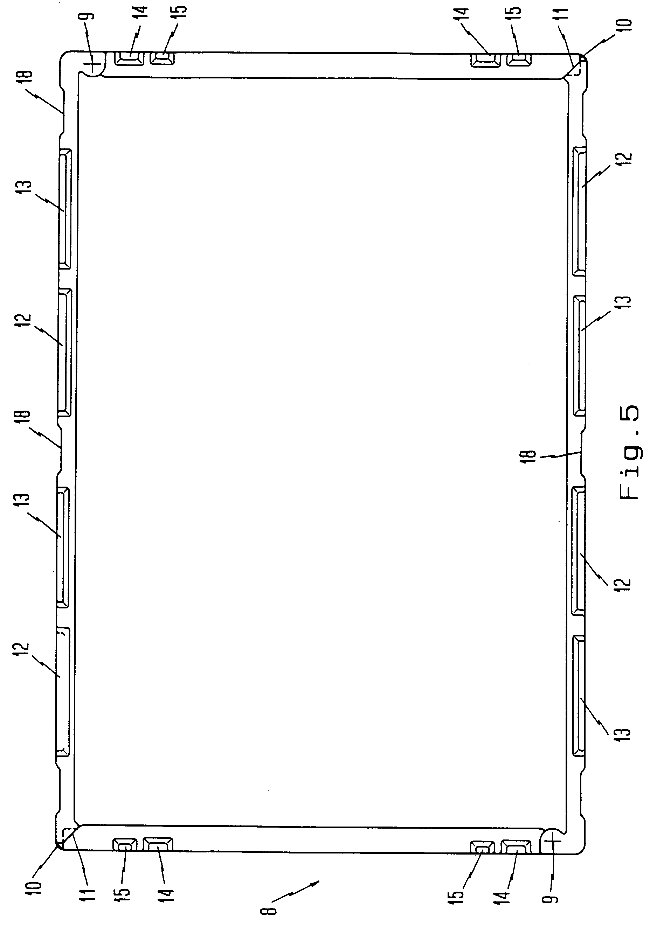

In den Fig. 1 bis 4 ist ein gleichsam als Boden wie auch als Deckel verwendbares Element des Behälters dargestellt, welches zusammen mit einem in den Fig. 5 bis 7 dargestellten Wandrahmen zu einem Behälter ergänzbar ist. Insbesondere kann ein Behälter durch ein in den Fig. 1 bis 4 dargestelltes Element als Boden, einen darauf aufsteckbaren Wandrahmen nach den Fig. 5 bis 7 und einen auf das obere Ende des Wandrahmens aufgesetzten Deckel aus dem Element nach den Fig. 1 bis 4 gebildet sein.

Das Element nach den Fig. 1 bis 4, im folgenden als Boden (oder aber genauso als Deckel) bezeichnet, ist ein plattenartiges Bodenelement 1 mit einer umlaufenden Wandleiste 2, die von der Bodenfläche geringfügig nach oben vorsteht und die auch ohne aufgesetzten Wandrahmen den auf dem Boden aufgenommenen Waren einen seitlichen Halt gibt. Die Höhe der Wandleiste, gemessen von der Unterseite der Bodenplatte 1 her, beträgt vorzugsweise zwischen 30 und 45 mm, insbesondere bevorzugt 37,5 mm. Die Wandleiste 2 ist an ihrem unteren Ende bei 2a nach innen eingezogen, so daß für den Rücktransport die Elemente, die den Bodendeckel bilden, ineinander gestapelt werden können. Die Einziehung 2a dient auch als Griffhilfe und erleichtert damit zugleich das Handling des Behälters, der aus dem allgemein mit 3 bezeichneten Element als Boden und Deckel und dem Wandrahmen 2 aufgebaut ist. Schließlich ist das Element 3 im dargestellten Ausführungsbeispiel an der Schmalseite mit einer Ausnehmung 4 versehen, die im geschlossenen Behälter einen Öffnungsschlitz für Ventilation und Kühlung, aber auch eine Griffläche für das Handling des Behälters bzw. des Elements 3 bildet. Auf der Unterseite 5 des Elements 3, die insbesondere in Fig. 1 dargestellt ist, befinden sich mit 6 bezeichnete Noppenfelder, die für eine Rutschhemmung bzw. Rutschfestigkeit beim Stapeln der Behälter untereinander, aber auch beim Stapeln der Behälter mit anderen Verpackungen, wie etwa Kartons, sorgen. Im dargestellten Ausführungsbeispiel sind je Hälfte der Unterseite 5 vier Noppenfelder, insgesamt also acht Noppenfelder 6 vorgesehen. Diese Aufteilung ist deswegen gewählt, weil hierdurch eine ideale Rutschhemmung sowohl beim vertikalen Aufeinanderstapeln der Behälter wie auch bei versetzter Stapelung gewährleistet ist. Die Noppenfelder bestehen aus einer Anzahl von Reihen von Noppen, wobei aufeinanderfolgende Reihen versetzt zueinander angeordnet sind. Die Noppen selbst sind bevorzugt halbkugelförmig ausgebildet. Es hat sich gezeigt, daß diese Anordnung der Noppenfelder und diese Ausbildung der Noppen besonders geeignet für den angestrebten Zweck der Rutschsicherung ist.

Zur Versteifung des Elements 3 sind im Bereich der Wandleisten 2 innenseitig vertikal verlaufende Versteifungsrippen 7 vorgesehen. Die Wandbereiche der Module können aber auch hohl oder mit Hohlprofilen ausgebildet sein. Auch Sicken sind möglich.

Kombinierbar sind diese als Boden oder Deckel gedachten Elemente 3 mit dem in den Fig. 5 bis 7 ersichtlichen Wandrahmen 8, der die Seitenwände des Behälters bildet. Dieser Wandrahmen 8 ist klappbar ausgebildet, wozu in den Eckbereichen des Wandrahmens, vorzugsweise geringfügig in die Längsseiten des Wandrahmens versetzt, Gelenke vorgesehen sind. Im dargestellten und besonders bevorzugten Ausführungsbeispiel sind zwei diametral gegenüberliegende Gelenke 9 als Scharniergelenke und die beiden anderen gegenüberliegenden Gelenke aus Filmscharnieren 10, etwa durch im Eckbereich angeordnete Verdünnungen des Wandrahmens gebildet. Die Filmscharniere 10 übernehmen mit den Schrägflächen 11 Anschlagfunktion des Rahmens in ausgeklappter Stellung, was zu einer Entlastung der Gelenkscharniere 9 beim Aufklappen führt. Bei Bedarf können auch an allen vier Ecken Filmscharniere oder auch Gelenkscharniere verwendet werden. Als Gelenkscharnier eignet sich insbesondere ein Scharnier mit zwei Gelenkfingern, die im Abstand angeordnet sind und zwischen die eine Gelenkzunge greift, wobei die drei Gelenkausbildungen durch einen Gelenkbolzen miteinander zum Gelenkscharnier verbunden sind.

Das Filmscharnier 11 mit einer sich bevorzugt über die gesamte Höhe des Wandrahmens erstreckenden filmscharnierartigen Materialverdünnung hat den Vorteil, daß Zugspannungen im wesentlichen über die ganze Höhe des Wandrahmens 8 und damit über eine sehr große Fläche aufgefangen werden, was für die nutzbare Einsatzzeit des Wandrahmens 8 von Bedeutung ist. Die als Anschlagflächen dienenden Schrägflächen 11 sind gegenüber den Hauptflächen des Wandrahmens 8 bevorzugt um 45° geneigt angeordnet. Die Höhe des Wandrahmens 8 liegt zweckmäßigerweise im Bereich von 65 bis 85 mm und zwar bevorzugt 75 mm, wobei modulartig Stufungen der Wandrahmen vorgesehen sein können, etwa Wandrahmenmodule mit 150 mm Höhe und Wandrahmenmodule mit 75 mm Höhe.

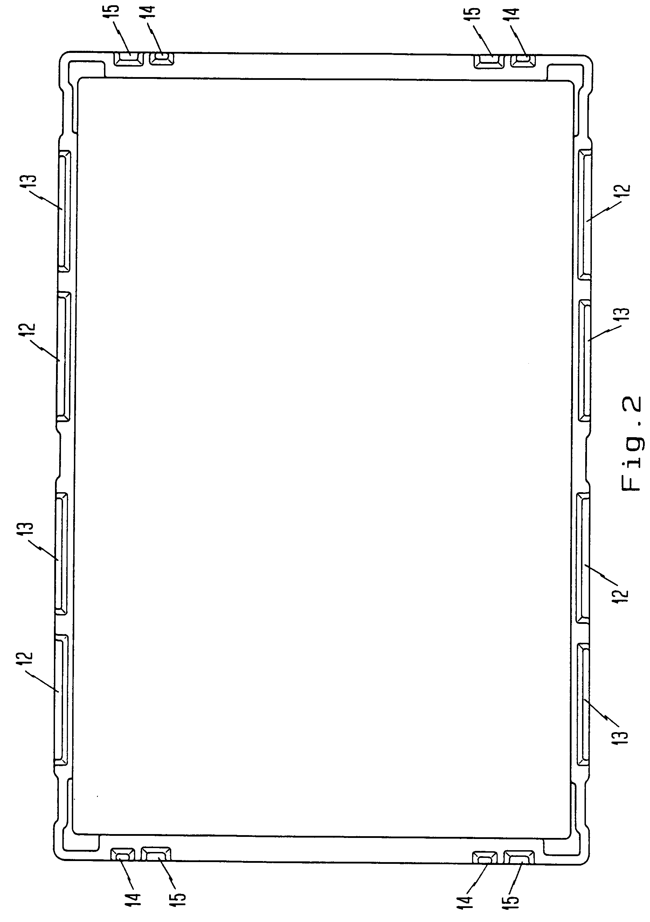

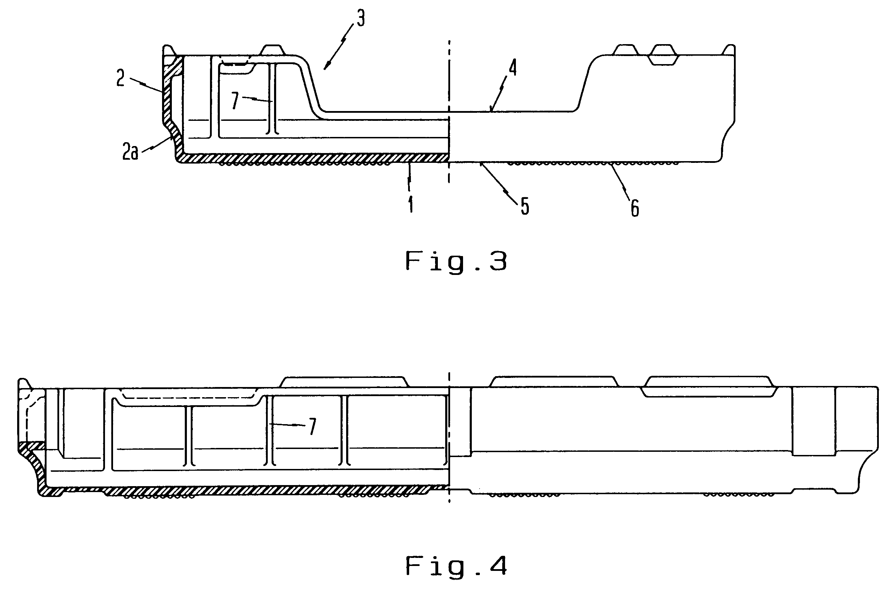

Die gegenseitige Fixierung der Einzelelemente 3 und 8 zur Bildung des Behälters erfolgt mittels abwechslungsweise angeordneten Zungen und Ausnehmungen, denen entsprechend abwechselnd angeordnete Zungen und Ausnehmungen des Gegenstücks gegenüberliegend angeordnet sind. So weist das den Boden oder den Deckel des Behälters bildende Element 3 an den beiden gegenüberliegenden Längsseiten Zungen 12 und Ausnehmungen 13 auf, wobei die Zungen 12 entsprechend Fig. 4 nach oben über die obere Randfläche 14 des Elements 3 vorstehen. Den Zungen 12 auf der einen Längsseite des Elements 3 liegen hierbei entsprechende Ausnehmungen 13 auf der anderen Längsseite direkt gegenüber. Die Zungen 14 an den beiden gegenüberliegenden Schmalseiten des Elements 3 sind zapfenförmig ausgebildet, so daß auch die Ausnehmungen 15 komplementär geformt sind. Auch hier sind die Zungen 14 und 15 in wechselweiser Anordnung gegenüberliegend angeordnet. Wie aus Fig. 2 recht deutlich zu entnehmen ist, sind die Zungen und Ausnehmungen 12, 14 und 13, 15 nach außen verlagert angeordnet und damit weg vom inneren Umfang der Wandleiste 2 zur Außenseite der Wandleiste hin verlagert. Dadurch ist sichergestellt, daß die vorstehenden Zungen 12 beim Ineinanderstapeln mehrerer Elemente 3 nicht stören, da ansonsten entsprechende Ausnehmungen im Bereich der Außenseite des Elements 3 vorgesehen werden müßten, was auch zu einer Schwächung des Aufbaus der Elemente 3 führen würde. Die Zungen 12, 14 besitzen hierbei auf der nach innen gerichteten Seite eine konische Fläche, wie sich recht deutlich aus den Fig. 3 und 4 ergibt. Selbstverständlich können anstelle der dargestellten Ausführungsformen der Zungen und Ausnehmungen auch andere geeignete Profilformen verwendet werden. Als zweckmäßig hat sich herausgestellt, auf jeder Seite der Elemente 3 zwei Zungen und zwei Ausnehmungen zu verwenden. Es versteht sich, daß zugehörige Zungen und Ausnehmungen der Module zur Bildung einer Einsteckverbindung angepaßte Längen aufweisen, wobei zweckmäßigerweise auch Einschnappverbindungen gebildet sein können.

Der Wandrahmen 8 enthält gleichfalls in wechselseitiger Anordnung komplementäre Zungen und Ausnehmungen, so daß die Elemente 3 und 8 beliebig aufeinandergesteckt werden können.

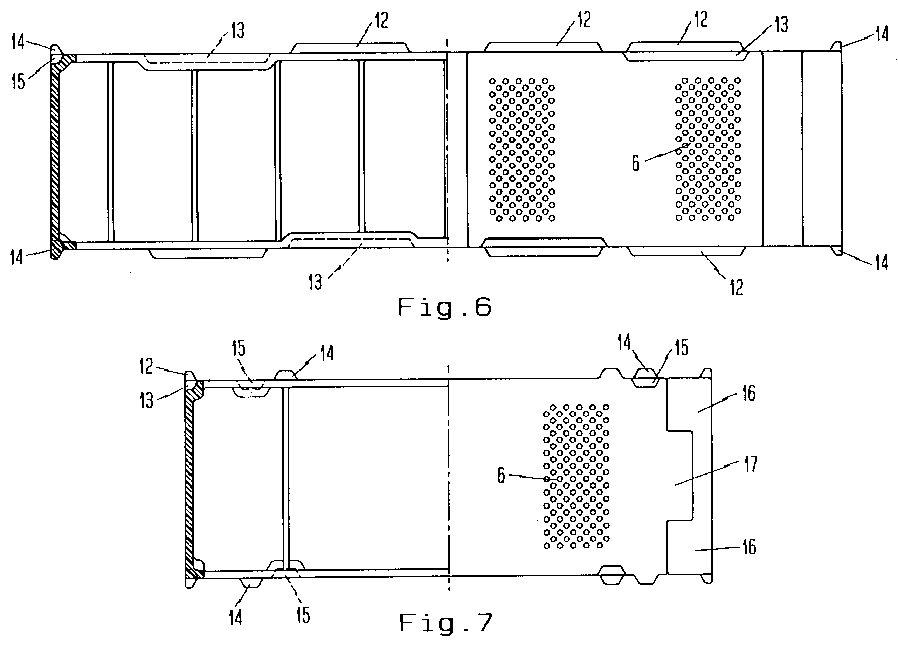

Es ergibt sich aus der Schilderung ohne weiteres, daß zur Bildung eines Behälters auch beliebig viele Wandrahmen auf ein Bodenelement gesetzt werden können. Wie sich aus den Fig. 6 und 7 ergibt, sind an den Außenflächen des Wandrahmens 8 entsprechende Noppenfelder 6 angeordnet, wobei auf der Längsseite des Wandrahmens jeweils 4 und auf der Schmalseite jeweils 2 Noppenfelder 6 vorgesehen sind. Auch die Zungen und Ausnehmungen des Wandrahmens 8 sind mit denselben Bezugszeichen wie das Element 3 bezeichnet. Fig. 7 zeigt schließlich rechts recht deutlich das Scharnier aus zwei mit Abstand angeordneten Fingern 16 und einer zwischen die Finger greifenden Scharnierzunge 17. Die Innenflächen des Wandrahmens 8 sind schließlich zweckmäßigerweise gleichfalls mit Versteifungsrippen 7 versteift.

Die Elemente 3 und 8 sind zweckmäßigerweise aus demselben Kunststoff hergestellt, und zwar vorzugsweise aus schlagfestem Polypropylen. Zur Fixierung der zum Behälter zusammengesetzten Elemente werden bevorzugt Spannbänder verwendet, die um den Behälter gezogen und ggf. verschweißt werden. Auch diese sind zweckmäßigerweise aus Polypropylen, also aus demselben Werkstoff wie die Elemente 3 und 8 hergestellt. Zweckmäßigerweise sind zur räumlichen Festlegung der Spannbänder korrespondierende Ausnehmungen in den Außenflächen der Elemente 3 und 8 vorgesehen, die mit 18 gekennzeichnet sind. Dies sichert eine bündige, optisch gefällige aber auch formschlüssig gesicherte Aufnahme der Befestigungsmittel.

Als Flächenmaß für Modul bzw. Behälter eignet sich jede Abmessung, die eine sinnvolle Anordnung der Behälter auf Norm-Paletten ermöglicht. Bevorzugte Abmessungen sind 300 x 200 für außen und 280 x 185 mm für innen, wobei geeignet auch Abmessungen von 400 x 200 für außen und 370 x 185 mm für innen oder 400 x 300 für außen sowie 370 x 280 mm für innen sind. Selbstverständlich sind weitere Variationen, insbesondere vorzugsweise regelmäßige Stufungen in der Wandhöhe der Module, möglich.

Zur Erhöhung der Festigkeit und zur Verminderung des Gewichts ist es ferner zweckmäßig, die Wandleisten und den Wandrahmen hohl bzw. mit Hohlräumen auszubilden, wobei die Hohlraumausbildung zweckmäßigerweise durch das Preßblasverfahren erfolgt.

Das Zusammenklappen des Wandrahmens erfolgt dadurch, daß durch schräges Zusammendrücken des Rahmens eine Längsseite und eine Schmalseite in einer Ebene ausgerichtet werden, so daß sich zwei aneinanderliegende Wandflächen mit je einer Schmal- und Längsseite in axialer Flucht ergeben.

Das beschriebene Behältersystem eignet sich insbesondere zum Einsatz in einem Mehrweg-Transportverpackungs-System mit den Kreisläufen Hersteller-Handel, Großhandel-Einzelhandel, Handel-Dienstleister und Handel-Konsument. Im Kreislauf Hersteller-Handel erfolgt die Erfassung bevorzugt über Menge und Gewicht, denn über die Anzahl der zur Verfügung gestellten Behälter. Der Hersteller beliefert den Handel mit einer vorgegebenen Behältermenge und gewährt die Rücknahme der Behälter. Nach Entsorgung des Handels wird die Menge der entsorgten Behälter gewogen und die Gewichte beim Eingang und beim Ausgang miteinander verglichen. Dem Handel wird hierbei eine Verlustquote zugestanden.

Im Kreislauf Großhandel-Einzelhandel erfolgt die Erfassung der Anlieferung des Industriepartners gleichfalls über Menge und Gewicht, ebenfalls die Weitergabe vom Großhandel an den Einzelhandel. Die Abholung beim Einzelhandel erfolgt über einen Dienstleister unter Vornahme einer entsprechenden Gewichtskontrolle. Der Dienstleister entsorgt den Handel über die Erfassung des Gewichts entweder beim Handel oder bei Anlieferung an den Dienstleister. Aufgabe des Dienstleisters ist das Sortieren, Waschen, Lagern und Finanzieren der Behältersysteme nach Abnahme vom Handel und vor Anlieferung an den Hersteller zum Schließen des Kreises des Mehrweg-Transportverpackungs-Systems.

Im Handel mit dem Konsumenten ist es zweckmäßig, ein Pfandsystem für die Behälter mit pauschalierten Pfandbeträgen vorzusehen, um etwaige Verluste zu reduzieren. Dabei ist es zweckmäßig, insbesondere mit Rücksicht auf ein Diebstahlrisiko, ein Chip-System einzuführen, so daß eine Pfandauszahlung nur dann erfolgt, wenn der MTS(Mehrweg-Transport-System)-Behälter gemeinsam mit dem Chip zurückgegeben wird. In Verbindung mit diesem neuen, hiermit gleichfalls beanspruchten, System ist der Einsatz des vorbeschriebenen Behälters außerordentlich zweckmäßig bzw. läßt sich ein solches System in besonders zweckmäßiger Weise mit dem beschriebenen Behälter realisieren.

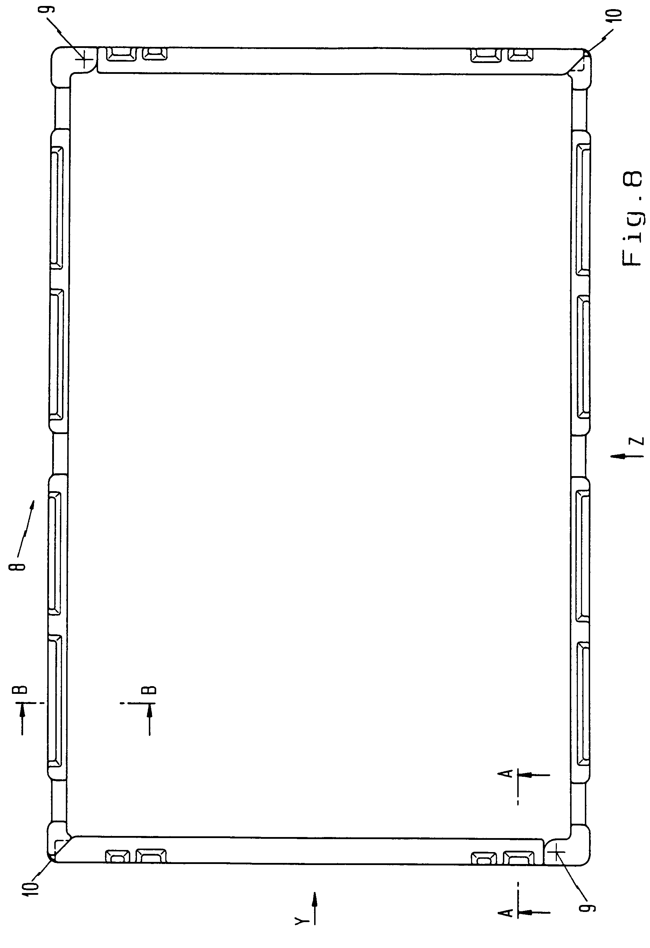

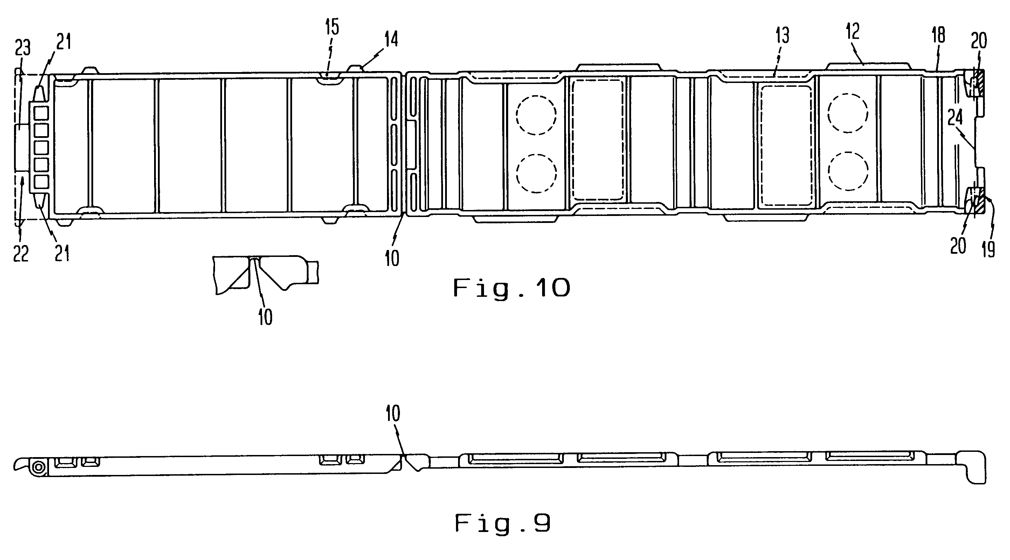

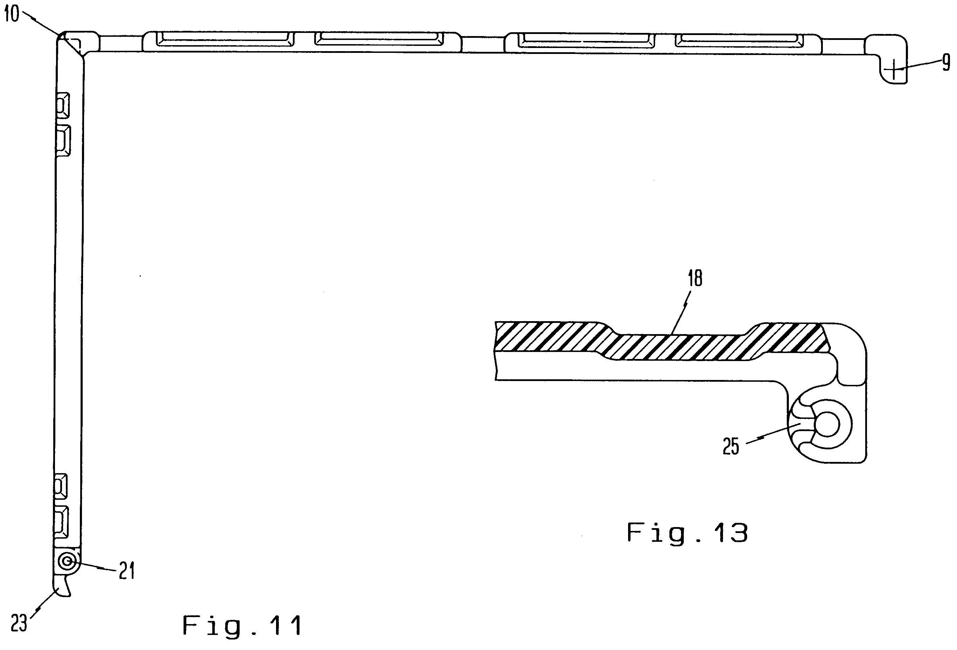

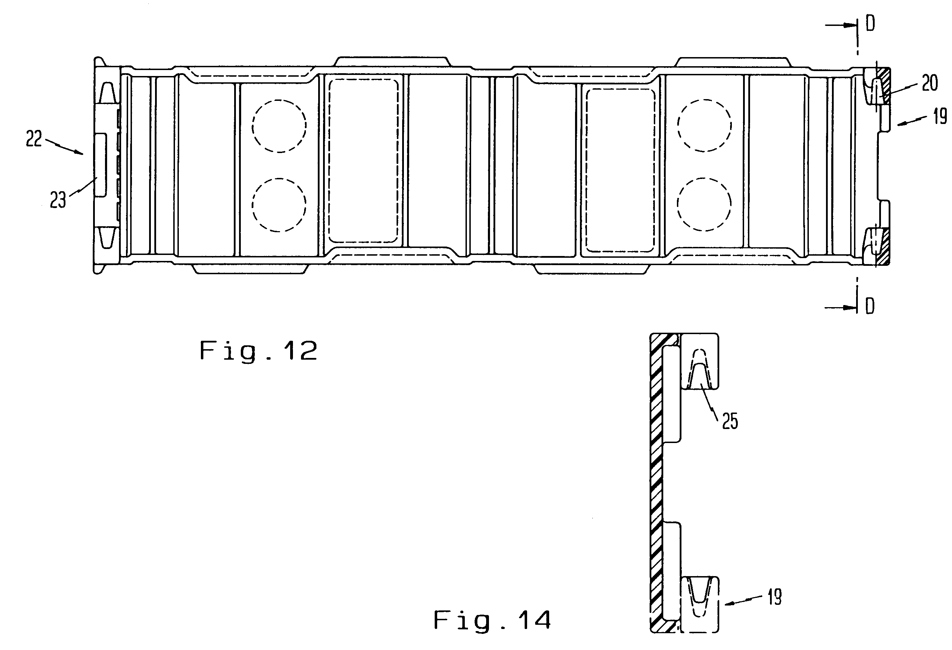

In den Fig. 8 bis 16 ist eine weitere Ausführungsform eines mit den übrigen Elementen kompatiblen Wandrahmens dargestellt, bei dem für dieselben Bauteile die gleichen Bezugszeichen verwendet sind. Auch dieser Wandrahmen weist nach Fig. 8 zwei diametral gegenüberliegende Gelenkscharniere 9 und zwei diametral gegenüberliegende Filmscharniere 10 auf, ist jedoch vorzugsweise aus zwei einander gleichen, separierbaren und zum Wandrahmen zusammensetzbaren Teilelementen aufgebaut. Eines der Teilelemente ist in gestreckter Stellung in Fig. 9 dargestellt, aus der sehr deutlich das Filmscharnier 10 ersichtlich ist. Aus den Fig. 9 und 10 wie auch aus den Fig. 12 und 13 ist auch sehr deutlich das Scharniergelenk ersichtlich, wobei an einem Ende des Teilelements an einer Gelenkgabel 19 zwei Aufnahmen 20 für die am anderen Ende des Teilelements ausgebildeten Gelenkzapfen 21 vorgesehen sind. An der Gelenkzapfeneinheit 22 ist auch eine Clipzunge 23 ausgebildet, die in Einklappstellung zur Bildung des Wandrahmens nach Fig. 8 in eine entsprechende Ausnehmung 24 an der Gelenkgabel 19 des anderen Teilelements schnappt. Die Gelenkzapfenaufnahme ergibt sich am besten aus der Einzelheit in Fig. 13. Im besonderen ist daraus ersichtlich, daß die Zapfen 21 zweckmäßigerweise über einen Schlitzkanal 25 in die Aufnahmen 20 einpreßbar sind, so daß sie im Gabelgelenk 19 fest, jedoch wiederum lösbar sitzen (vgl. Fig. 13).

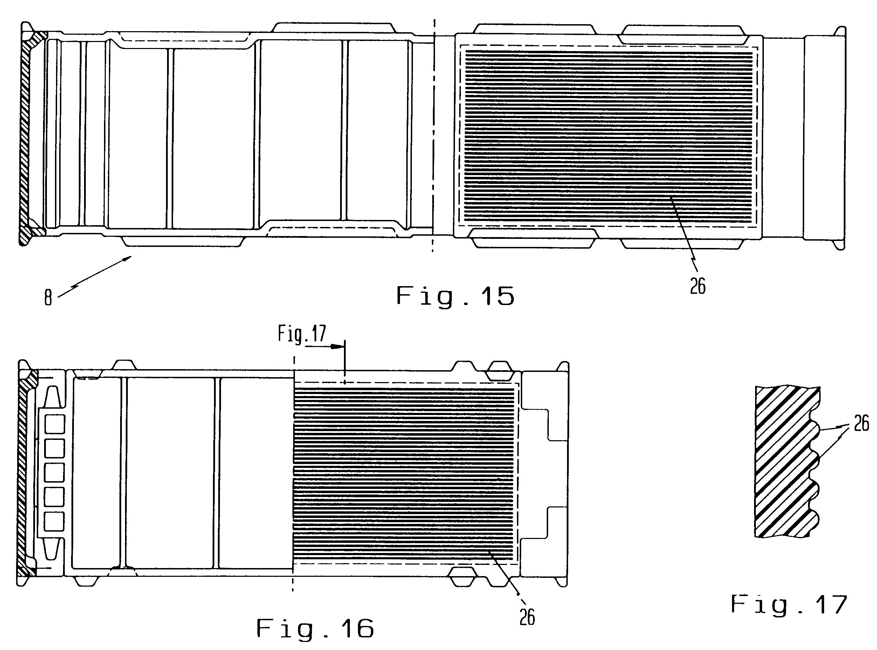

Aus den Ansichten in den Fig. 15 und 16 ist ersichtlich, daß an der Außenseite dieses Wandrahmens 8 längs- und parallel zueinander verlaufende Rippen 26 in Art eines Rippenbandes ausgebildet sind, deren Profilform sich aus Fig. 17 ergibt, und die zur verbesserten Aufnahme und Abnahme von vor Ort, also im Ladenregal, für die Behälter gebrauchten Etiketten dienen. Aufgrund dieser Rippenstruktur lassen sich Labels nach Gebrauch sehr gut wieder abnehmen und neue Labels aufbringen, insbesondere wenn derselbe Behälter mit einem anderen Gut im Ladenregal präsentiert wird.

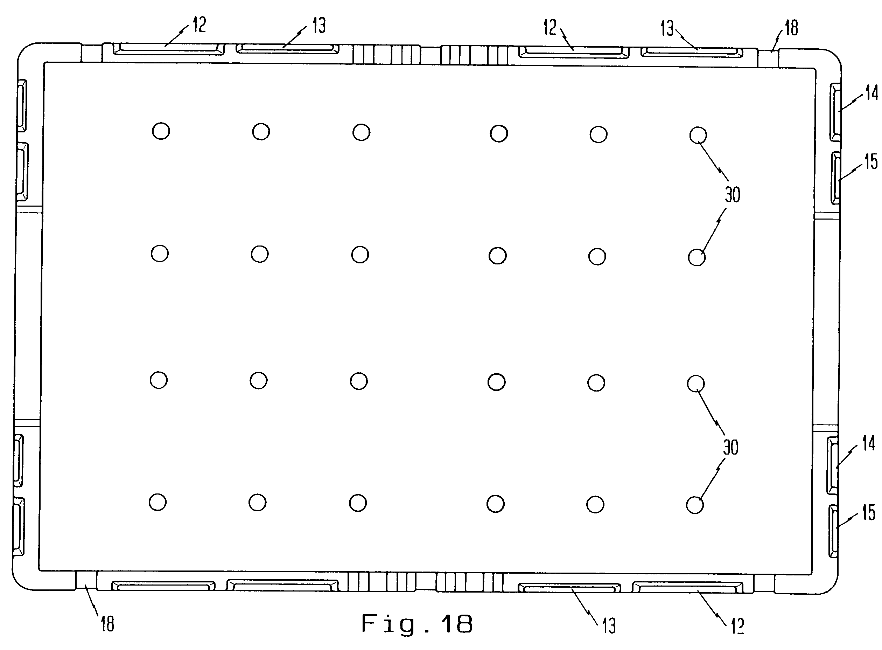

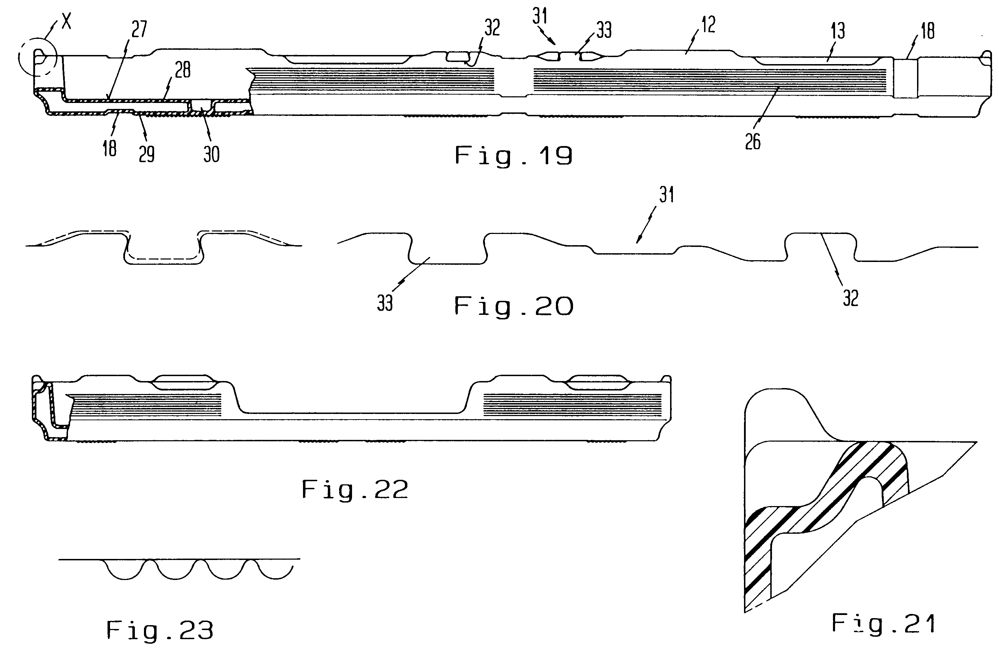

In den Fig. 18 und folgende ist eine weitere Ausführungsform eines Behälters aus Boden, Deckel und Wandrahmen dargestellt, insbesondere für große Behälter, etwa Behälter mit Grundrißabmessungen von etwa 400 x 600 mm und mehr. Zur Erhöhung der Steifigkeit der Boden- und/oder Deckelelemente sind diese doppelwandig ausgebildet, wie sich aus Fig. 19 und 22 ergibt. Die doppelwandige Ausbildung erfolgt durch Extrusionsblasen. An der mit 27 bezeichneten Oberseite des Bodens des Deckels sind zur Gewährleistung eines exakten Abstands zwischen den beiden Wänden 28 und 29 des Deckels von der Oberseite 27 her napfartige oder rohrartige Gebilde 30 einstückig eingeformt, die zweckmäßigerweise in regelmäßigen Abständen, insbesondere in parallelen Reihen über dem Grundriß des Deckels und des Bodens ausgebildet sind. Durch diese napfartigen oder rohrartigen Gebilde 30 wird aber nicht nur der Abstand zwischen den beiden Wänden des hohlen Deckels gewährleistet, sondern es wird auch die Steifigkeit des Deckels oder des Bodens erhöht. An der Außenfläche des Deckels und Bodens sind ebenso wie beim im folgenden noch beschriebenen Wandrahmen Rippen 26 ausgebildet, die längs und parallel verlaufend angeordnet sind und den Rippen nach den Fig. 16 und 17 entsprechend. Ersichtlich sind die Rippen mit engem Abstand nebeneinander angeordnet. Ferner ähnelt der Aufbau des Deckels und/oder Bodens den vorher beschriebenen Elementen, so daß für gleiche Bauteile dieselben Bezugszeichen verwendet wurden. Eine wesentliche Abänderung gegenüber den vorher beschriebenen Ausführungsbeispielen besteht aber in einem Verrastmechanismus 31, der in den Fig. 19 und 20 dargestellt ist. Im einzelnen handelt es sich um hinterschnittene Nuten 32 und entsprechende Vorsprünge 33, die komplementär zueinander ausgebildet sind, so daß beim Zusammensetzen eines Deckels mit einem weiteren Boden oder Deckel oder Wandrahmen entsprechende Nuten und Vorsprünge durch Einschnappen verrasten können. Dadurch ergibt sich ein gewisser Halt und eine gewisse Fixierung der einzelnen Elemente zur Bildung eines Behälters und eine Lösung ist nur unter gewissem Kraftaufwand möglich. Zweckmäßigerweise werden zur absoluten Fixierung der Behälterelemente zu einem Behälter weitere Befestigungsmechanismen, wie insbesondere die zuvor beschriebenen Spannbänder verwendet, die verschweißbar und durch einfaches Aufreißen wieder lösbar sind, insbesondere in entsprechende Ausnehmungen 18 der Elemente bündig aufgenommen sind. Aufgrund der hohlen Ausbildung von Deckel und Boden können die bei den anderen Ausführungsformen vorgesehenen Innenrippen 7 entfallen. Wie sich aus Fig. 19 ergibt, sind auch am oberen Rand und nicht nur an der Außenseite die Ausnehmungen 18 für die Aufnahme der Spannbänder vorgesehen.

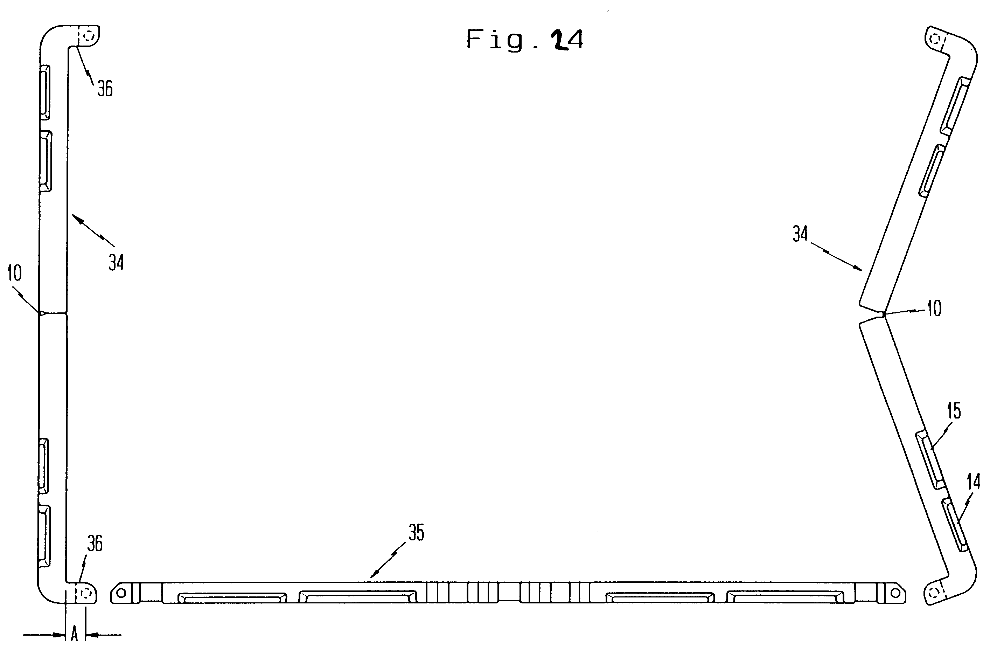

In den Fig. 24ff ist ein wiederum zusammenklappbarer Wandrahmen 8 dargestellt, für den für dieselben Bauteile die gleichen Bezugszeichen verwendet sind. Der Wandrahmen 8 setzt sich entsprechend Fig. 24 aus zwei die Schmalseite bildenden Teilelementen 34 und zwei die Längsseite bildenden Teilelementen 35 zusammen, wobei in Fig. 24 nur ein längsverlaufendes Teilelement 35 dargestellt ist. Der Wandrahmen ist aus den vier Teilelementen 34 und 35 zusammengesetzt, wobei in den Eckbereichen jeweils Gelenkscharniere ähnlich der vorbeschriebenen Ausbildung angeordnet sind. Der Aufbau der Gelenkscharniere ergibt sich im einzelnen aus den Zeichnungen.

Wesentlich ist bei den Gelenkscharnieren, daß die Gelenke nicht unmittelbar in der Ecke sitzen, sondern um ein gewisses Maß A versetzt sind, wie sich aus Fig. 24 ergibt, so daß die Gelenkachse aus der unmittelbaren Ecke heraus etwas in die Längsseite verlagert ist. Dies ist vorteilhaft, weil hierdurch beim Zusammenklappen die größte Abmessung durch die Länge des längsverlaufenden Teilelements 35 gebildet ist, da sich die am kürzeren Teilelement an den Enden vorragenden Gelenkschenkel 36 beim Zusammenklappen nach innen legen und nicht über die Teilelemente 35 nach außen hin vorstehen. Zusätzlich sind die kurzen Teilelemente 34 in ihrer Mitte mit einem Filmscharnier analog dem Filmscharnier 10 ausgebildet, so daß, wie sich aus Fig. 24 rechts ergibt, die Teilelemente 34 nach innen gefaltet bzw. geklappt werden können. In der zusammengeklappten Stellung stehen somit die Teilelemente 34 nicht über die Teilelemente 35 vor.

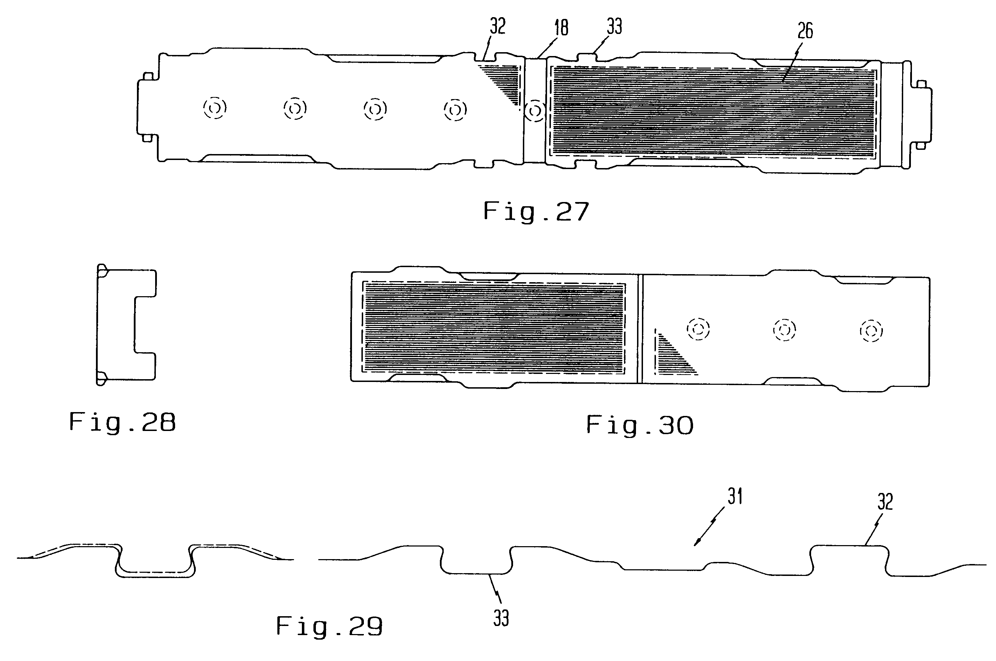

Der sich aus den Fig. 27 und 29 ergebende Verrastmechanismus 31 entspricht dem Verrastmechanismus am zuvor beschriebenen Deckel, so daß ein Weiteres Eingehen nicht erforderlich ist. Ferner sind an den Außenflächen wieder die längsverlaufenden Rillen 26 bei Bedarf vorgesehen. Die Teilelemente bzw. der Wandrahmen können hohl oder auch mit Innenrippen ausgebildet sein.

## Patentansprüche

1. Mehrwegverpackung aus Kunststoff zur Aufnahme von Gegenständen, die aus vereinzelbaren Elementen auf der Basis von zwei unterschiedlichen Modulelementen (3, 8) zum Behälter aufbaubar ist, wobei die Modulelemente (3, 8) der Verpackung durch ein als Boden oder Deckel verwendbares Element (3) und mindestens einen beidseitig offenen Wandrahmen (8) gebildet sind, **dadurch gekennzeichnet, daß** das Boden/Deckelelement (3) mit einer in ihrer Höhe auf Tablettfunktion des Boden/Deckelelements abgemagerten Wandleiste (2) als Tablett für den Verpackungsinhalt ausgebildet, an Seitenrändern mit einer griffbildenden Einziehung (2a) zwischen Wandleiste und Bodenrand stapelbar ausgebildet und in seiner Wandleiste (2) mit handbreiten, im System mit den übrigen Elementen der Verpackung griffbildenden Ausnehmungen (4) versehen ist und daß die Seitenwandhöhe des Wandrahmens (8) zur Bildung der Behälterseitenwand größer als die Höhe der Wandleiste (2) des Boden/Deckelelementes (3) ist.

2. Verpackung nach Anspruch 1, **dadurch gekennzeichnet, daß** die Ausnehmungen (4) an beiden Schmalseiten der Wandleiste (2) vorgesehen sind.

3. Verpackung nach einem der vorhergehenden Ansprüche, **dadurch gekennzeichnet, daß** das Element (3) und der Wandrahmen (8) glatte Außenflächen aufweisen.

4. Verpackung nach einem der Ansprüche 1 bis 3, **dadurch gekennzeichnet, daß** Element (3) und Wandrahmen (8) an der Außenseite mit längsverlaufenden parallelen und eng beabstandeten Rippen (26) versehen sind.

5. Verpackung nach einem der vorhergehenden Ansprüche, **dadurch gekennzeichnet, daß** der Wandrahmen (8) zusammenklappbar ausgebildet ist.

6. Verpackung nach Anspruch 5, **dadurch gekennzeichnet, daß** der Wandrahmen (8) vorzugsweise in den Eckbereichen und/oder in der Mitte einer oder mehrerer Rahmenseiten Gelenke aufweist, so daß nach dem Zusammenklappen jeweils eine Schmal- und Längsseite fluchtend ausgerichtet sind und/oder die längeren und kürzeren Rahmenseiten in sich zur Vekürzung der geklappten Rahmenelemente klappbar sind.

7. Verpackung nach Anspruch 5 oder 6, **dadurch gekennzeichnet, daß** als Gelenke Film- und/oder Gelenkscharniere verwendet sind.

8. Verpackung nach einem der Ansprüche 5 bis 7, **dadurch gekennzeichnet, daß** zwei diametral gegenüberliegende Gelenke durch ein Filmscharnier (10) und die beiden anderen gegenüberliegenden Gelenke durch je ein Gelenkscharnier (9) gebildet sind.

9. Verpackung nach den Anspruch 7 oder 8, **dadurch gekennzeichnet, daß** die Filmscharniere (10) mit Anschlägen (11) versehen sind, die vorzugsweise durch Schrägflächen gebildet sind, die in aufgeklappter Stellung aneinanderstoßen.

10. Verpackung nach einem der Ansprüche 5 bis 9, **dadurch gekennzeichnet, daß** die Schmalseiten (34) des Wandrahmens (8) bevorzugt mittig ein Scharnier, insbesondere ein Filmscharnier (10) aufweisen.

11. Verpackung nach einem der Ansprüche 5 bis 10, **dadurch gekennzeichnet, daß** die Klappscharniere (9) aus den Ecken in die Längsseiten des Wandrahmens (Maß A, Fig. 24) zum Zwecke des Einlappens versetzt sind, wobei die Gelenkglieder der Schmalseite (34) des Wandrahmens (8) an vorstehenden Schenkeln (36) angeordnet sind.

12. Verpackung nach den vorhergehenden Ansprüchen, **dadurch gekennzeichnet, daß** zur Fixierung der Modulbausteine (3, 8) Nut-/Feder-Verbindungen vorgesehen sind.

13. Verpackung nach Anspruch 12, **dadurch gekennzeichnet, daß** die Nut-/Federverbindungen an den oberen Randflächen des als Boden oder Deckel verwendbaren Elements (3) und an den unteren und oberen Randflächen des Wandrahmens (8) vorgesehen sind.

14. Verpackung nach den Ansprüchen 12 oder 13, **dadurch gekennzeichnet, daß** die Nut-/Federverbindungen über dem Umfang in regelmäßig wechselseitiger Anordnung zueinander vorgesehen sind.

15. Verpackung nach den Ansprüchen 12-14, **dadurch gekennzeichnet, daß** die Nut-/Federverbindungen durch Zungen (12, 14) und Ausnehmungen (13, 15) gebildet sind, wobei vorzugsweise die Zungen (14) und Ausnehmungen (15) an den Schmalseiten zapfen- oder stiftartig mit geringerer Längserstreckung als die Zungen (12) und Ausnehmungen (13) an den Längsseiten der Modulbausteine (3, 8) ausgebildet sind.

16. Verpackung nach Anspruch 15, **dadurch gekennzeichnet, daß** die Zungen (12, 14) und Ausnehmungen (13, 15) am Außenrand der Elemente angeordnet sind.

17. Verpackung nach Anspruch 16, **dadurch gekennzeichnet, daß** die Zungen (33) und Ausnehmungen (32) stirnseitig an den Randflächen, insbesondere an den langen Seiten der Elemente vorgesehen sind, die bevorzugt hinterschnitten sind und eine Einschnappverbindung bilden.

18. Verpackung nach den vorhergehenden Ansprüchen, **dadurch gekennzeichnet, daß** die Elemente boden- und/oder wandseitig mit Noppenfeldern bestückt sind.

19. Verpackung nach Anspruch 18, **dadurch gekennzeichnet, daß** die Noppenfelder aus mehreren Reihen von Noppen bestehen, die vorzugsweise regelmäßig zueinander versetzt sind.

20. Verpackung nach den Ansprüchen 18 oder 19, **dadurch gekennzeichnet, daß** die Noppen durch halbkugelförmige Vorsprünge gebildet sind.

21. Verwendung des Mehrwegebehälters nach einem der vorhergehenden Ansprüche für ein vorzugsweise in sich geschlossenes Mehrweg-Transportverpackungs-System, bei dem die Behälter nach Menge und Gewicht zugeteilt und abgenommen sowie vom Hersteller zum Handel geliefert und vorzugsweise von dort über ein Pfandsystem an den Verbraucher gegeben werden, wobei die Rücknahme der Behälter vorzugsweise durch einen gesonderten Dienstleister erfolgt, der für das Sortieren, Waschen und die erneute Ausgabe der Behälter an den Hersteller verantwortlich ist.

## Claims

1. Re-usable package made of plastic for receiving articles, which can be constructed to form the container from separable elements based on two different module elements (3, 8), the module elements (3, 8) of the package being formed by an element (3) which can be used as a base or a lid and by at least one wall frame (8) which is open on both sides, characterized in that the base/lid element (3) is designed as a tray for the package contents, with a wall strip (2) narrowed in its height for the tray function of the base/lid element, is designed in a stackable manner, on side borders with a grip-forming recess (2a) between wall strip and base border, and is provided in its wall strip (2) with hand-width clearances (4) which form grips in the system with the rest of the elements of the package, and in that the side-wall height of the wall frame (8), in order to form the container side wall, is greater than the height of the wall strip (2) of the base/lid element (3).

2. Package according to Claim 1, characterized in that the clearances (4) are provided on the two narrow sides of the wall strip (2).

3. Package according to one of the preceding claims, characterized in that the element (3) and the wall frame (8) exhibit smooth outer surfaces.

4. Package according to one of Claims 1 to 3, characterized in that element (3) and wall frame (8) are provided on the outer side with longitudinally running parallel ribs (26) which have narrow spacings between them.

5. Package according to one of the preceding claims, characterized in that the wall frame (8) is designed in a collapsible manner.

6. Package according to Claim 5, characterized in that the wall frame (8) preferably exhibits joints in the corner regions and/or in the centre of one or more frame sides, with the result that, after the collapsing operation, in each case one narrow side and longitudinal side are in alignment and/or the longer and shorter frame sides can be folded in on themselves in order to shorten the folded frame elements.

7. Package according to Claim 5 or 6, characterized in that the joints used are film hinges and/or joint hinges.

8. Package according to one of Claims 5 to 7, characterized in that two diametrically opposite joints are formed by a film hinge (10) and the two other opposite joints are each formed by a joint hinge (9).

9. Package according to Claim 7 or 8, characterized in that the film hinges (10) are provided with stops (11) which are preferably formed by oblique surfaces which butt against one another in the folded-open position.

10. Package according to one of Claims 5 to 9, characterized in that the narrow sides (34) of the wall frame (8) preferably exhibit a hinge, in particular a film hinge (10), in the centre.

11. Package according to one of Claims 5 to 10, characterized in that, for the purpose of folding in, the folding hinges (9) are offset from the corners into the longitudinal sides of the wall frame (dimension A, Figure 24), the joint members of the narrow side (34) of the wall frame (8) being arranged on projecting legs (36).

12. Package according to the preceding claims, characterized in that groove/tongue connections are provided in order to fix the module components (3, 8).

13. Package according to Claim 12, characterized in that the groove/tongue connections are provided on the upper border surfaces of the element (3) which can be used as a base or a lid and on the lower and upper border surfaces of the wall frame (8).

14. Package according to Claims 12 or 13, characterized in that the groove/tongue connections are provided, over the circumference, in a regularly alternate arrangement with respect to one another.

15. Package according to Claims 12-14, characterized in that the groove/tongue connections are formed by tabs (12, 14) and clearances (13, 15), the tabs (14) and clearances (15) on the narrow sides preferably being designed in a peg-like or pin-like manner with a smaller longitudinal extent than the tabs (12) and clearances (13) on the longitudinal sides of the module components (3, 8).

16. Package according to Claim 15, characterized in that the tabs (12, 14) and clearances (13, 15) are arranged on the outer border of the elements.

17. Package according to Claim 16, characterized in that the tabs (33) and clearances (32) are provided on the end side of the border surfaces, in particular on the long sides of the elements, which are preferably undercut and form a snap-in connection.

18. Package according to the preceding claims, characterized in that the elements are provided, on the base and/or walls, with protrusion zones.

19. Package according to Claim 18, characterized in that the protrusion zones comprise a plurality of rows of protrusions which are preferably offset regularly with respect to one another.

20. Package according to Claims 18 or 19, characterized in that the protrusions are formed by hemispherical protuberances.

21. Use of the re-usable container according to one of the preceding claims for a preferably self-contained re-usable transportation-package system, in the case of which the containers are allocated in accordance with quantity and weight and are accepted and delivered from the manufacturer to the trade and are preferably given, from there, to the consumer via a deposit system, the containers preferably being returned by a separate agent, who is responsible for sorting, washing and delivering the containers again to the manufacturer.

## Revendications

1. Emballage réutilisable, en matière plastique, destiné à recevoir des objets divers, qui peut être monté à partir d'éléments séparables, sur la base de deux éléments modulaires différents (3, 8), afin de former un conteneur, les éléments modulaires (3, 8) de l'emballage étant constitués d'un élément (3) pouvant être utilisé comme fond ou comme couvercle, et d'au moins un cadre-paroi (8), ouvert au niveau de deux de ses cotés, caractérisé en ce que l'élément (3) formant fond/couvercle est formé comme un plateau pour supporter le contenu de l'emballage, un liteau de paroi (2), aminci sur sa hauteur, étant formé sur la partie faisant fonction de plateau de l'élément formant fond/couvercle, celui-ci comporte au niveau de ses bords latéraux un rétreint (2a) formant une poignée pouvant s'emboîter entre le liteau de paroi et le bord du fond, et comporte dans son liteau de paroi (2) des découpes, ayant la largeur d'une main, qui forment des poignées lorsque le système comporte les autres éléments de l'emballage, et en ce que la hauteur de la paroi latérale du cadre-paroi (8), destiné à former la paroi latérale du conteneur, est supérieure à la hauteur du liteau de paroi (2) de l'élément (3) formant fond/couvercle.

2. Emballage selon la revendication 1, caractérisé en ce que les découpes (4) sont agencées au niveau des deux petits cotés du liteau de paroi (2).

3. Emballage selon l'une quelconque des revendications précédentes, caractérisé en ce que l'élément (3) et le cadre-paroi (8) ont des surfaces extérieures lisses.

4. Emballage selon l'une quelconque des revendications 1 à 3, caractérisé en ce que l'élément (3) et le cadre-paroi (8) comportent au niveau de leur coté extérieur des nervures (26) parallèles et faiblement espacées qui s'étendent longitudinalement.

5. Emballage selon l'une quelconque des revendications précédentes, caractérisé en ce que le cadre-paroi (8) est formé de manière à ce qu'on puisse le replier.

6. Emballage selon la revendication 5, caractérisé en ce que le cadre-paroi (8) comporte des articulations qui sont situées de manière préférée au niveau des coins et/ou au milieu d'un ou de plusieurs cotés du cadre-paroi, de telle sorte qu'après avoir été repliés, un petit et un grand coté soient toujours disposés en alignement et/ou les plus longs et les plus petits cotés du cadre-paroi puissent être repliés sur eux-mêmes pour raccourcir la longueur des éléments repliés du cadre.

7. Emballage selon la revendication 5 ou 6, caractérisé en ce que des charnières articulées et/ou en film sont utilisées en tant qu'articulations.

8. Emballage selon l'une quelconque des revendications 5 à 7, caractérisé en ce que deux articulations diamétralement opposées sont constituées d'une charnière en film (10) et en ce que les deux autres articulations opposées sont constituées chacune d'une charnière articulée (9).

9. Emballage selon la revendication 7 ou 8, caractérisé en ce que la charnière en film (10) est munie de butées (11), lesquelles présentent de manière préférée des surfaces inclinées, qui viennent en appui l'une contre l'autre en position repliée.

10. Emballage selon l'une quelconque des revendications 5 à 9, caractérisé en ce que les petits cotés (34) du cadre-paroi (8) comportent une charnière, agencée de manière préférée au niveau de leur milieu, en particulier, une charnière en film (10).

11. Emballage selon l'une quelconque des revendications 5 à 10, caractérisé en ce que les charnières articulées (9) sont décalées vis-à-vis des coins dans les grands cotés du cadre-paroi (distance A, figure 24) dans le but de permettre un encastrement, les éléments d'articulation du petit coté (34) du cadre-paroi (8) étant agencés au niveau du bras (36) faisant saillie.

12. Emballage selon l'une quelconque des revendications précédentes, caractérisé en ce que des liaisons languette/rainure sont adoptées pour la fixation des éléments de construction modulaires (3, 8).

13. Emballage selon la revendication 12, caractérisé en ce que les liaisons languette/rainure sont situées au niveau des surfaces supérieures des bords de l'élément (3) pouvant être utilisé comme fond ou couvercle et au niveau des surfaces inférieures et supérieures des bords du cadre-paroi (8).

14. Emballage selon la revendication 12 ou 13, caractérisé en ce que les liaisons languette/rainure sont formées tout autour de la périphérie, généralement, en étant agencées de manière régulièrement alternée les unes par rapport aux autres.

15. Emballage selon l'une quelconque des revendications 12 à 14, caractérisé en ce que les liaisons languette/rainure sont formées à l'aide de languettes (12, 14) et de rainures (13, 15), les languettes (14) et les rainures (15) étant formées de manière préférée au niveau des petits cotés des pièces de construction modulaires (3, 8), de manière analogue à des chevilles ou goujons, en ayant une extension longitudinale plus faible que les languettes (12) et les rainures (13) formées au niveau des grands cotés.

16. Emballage selon la revendication 15, caractérisé en ce que les languettes (12, 14) et les rainures (13, 15) sont agencées au niveau du bord extérieur des éléments.

17. Emballage selon la revendication 16, caractérisé en ce que des languettes (33) et des rainures (32) sont agencées sur la face avant des surfaces des bords, en particulier, au niveau des grands cotés des éléments, lesquelles ont de manière préférée la forme de contre-dépouilles et forment une liaison encliquetable.

18. Emballage selon l'une quelconque des revendications précédentes, caractérisé en ce que les éléments sont garnis, coté fond et/ou parois, de zones de nope.

19. Emballage selon la revendication 18, caractérisé en ce que les zones de nope sont constituées de plusieurs rangées de nope, qui sont de manière préférée régulièrement décalées les unes vis-à-vis des autres.

20. Emballage selon la revendication 18 ou 19, caractérisé en ce que les nopes ont la forme de saillies hémisphériques.

21. Mode d'utilisation de l'emballage réutilisable selon l'une quelconque des revendications précédentes, de manière préférée, relatif à un système d'emballage fermé, réutilisable, adapté au transport, où les conteneurs sont attribués et retirés à la quantité et au poids et sont mis dans le commerce directement par le fabricant, puis mis à disposition du consommateur par un système de consigne, de sorte que la reprise du conteneur s'effectue par l'intermédiaire d'un prestataire de service différent qui est responsable du tri, du nettoyage et de la remise à neuf du conteneur auprès du fabricant.
